Europäisches Patentamt

European Patent Office

Office européen des brevets

(11) Veröffentlichungsnummer: **0 250 924 B1**

# EUROPÄISCHE PATENTSCHRIFT

(45) Veröffentlichungstag der Patentschrift: **12.08.92**

(51) Int. Cl.⁵: **H04L 27/20**

(21) Anmeldenummer: **87108145.1**

(22) Anmeldetag: **05.06.87**

(54) **Verfahren zur Uebertragung von digitalen Daten mittels kontinuierlicher Phasenmodulation.**

(30) Priorität: **24.06.86 CH 2539/86**

(43) Veröffentlichungstag der Anmeldung:
**07.01.88 Patentblatt 88/01**

(45) Bekanntmachung des Hinweises auf die
Patenterteilung:
**12.08.92 Patentblatt 92/33**

(84) Benannte Vertragsstaaten:
**AT CH DE FR GB IT LI NL SE**

(56) Entgegenhaltungen:

**IEEE COMMUNICATIONS MAGAZINE, Band
24, Nr. 4, April 1986, Seiten 25-37, IEEE, New
York, US; C.E. SUNDBERG: "Continuous phase modulation"**

**GLOBECOM'82 - IEEE GLOBAL TELECOMM-
UNICATIONS CONFERENCE, Conference Record, Miami, 29. November - 2. Dezember
1982, Band 2, Seiten 877-883, IEEE, New York,
US; T. AULIN et al.: "Synchronization properties of continuous phase modulation"**

**NATIONAL TELECOMMUNICATIONS CONFE-
RENCE, New Orleans, 1.-3. Dezember 1975,
Band 2, Seiten 38.1 - 38.5, IEEE, New York,**

**US; T.A. SCHONHOFF: "Bandwidth VS. Performance considerations for CPFSK"**

(73) Patentinhaber: **Ascom Radiocom AG
Ziegelmattstrasse 1
CH-4503 Solothurn(CH)**

(72) Erfinder: **Dzung, Dacfey, Dr.
Büntenstrasse 25
CH-8116 Würenlos(CH)**

(74) Vertreter: **Keller, René, Dr. et al
Patentanwälte Dr. René Keller & Partner
Postfach 12 Marktgasse 31
CH-3000 Bern 7(CH)**

EP 0 250 924 B1

**Beschreibung**

Die vorliegende Erfindung betrifft ein Verfahren zur Uebertragung von digitalen Daten mittels kontinuierlicher Phasenmodulation gemäss dem Oberbegriff des Anspruchs 1. Ein solches Verfahren ist beispielsweise aus dem Artikel von T. Aulin und C.-E. W. Sundberg, "Continuous Phase Modulation"-Parts I, II, IEEE Trans. Commun., vol. COM-29, No. 3, März 1981, S. 196-225, bekannt.

Die kontinuierliche Phasenmodulation (CPM = Continuous Phase Modulation) hat in der Vergangenheit als effizientes Verfahren zur Uebertragung von digitalen Daten beträchtliche Aufmerksamkeit erlangt. Dies liegt zum Einen daran, dass wegen der konstanten Hüllkurve ein CPM-Signal unempfindlich gegen Nichtlinearitäten in der Uebertragungskette ist.

Zum Anderen werden durch die kontinuierliche Phasenänderung und die damit verbundenen "weichen" Wellenformen gute spektrale Eigenschaften erreicht, die sich in einem raschen Abfall der spektralen Leistungsdichte ausserhalb des nutzbaren Frequenzbandes bemerkbar machen.

Wie in dem eingangs genannten Artikel näher ausgeführt, lassen sich die spektralen Eigenschaften eines CPM-Signals dadurch verbessern, dass die am Eingang des Senders anstehende Symbolfolge zunächst nach Massgabe eines bestimmten Frequenz-Basisband-Impulses g(t) einer Formung unterworfen wird.

Hierbei werden besonders günstige Ergebnisse erzielt, wenn die Funktion g(t) sich nicht nur auf ein Symbolintervall beschränkt (full response scheme), sondern sich über mehrere Symbolintervalle erstreckt (partial response scheme), so dass das übertragene Sendesignal in einem Symbolintervall nicht nur durch das jeweilige, in diesem Intervall auftretende Symbol, sondern auch durch zeitlich benachbarte Symbole beeinflusst wird.

Bei einer digitalen Realisierung des bekannten Verfahrens sind im Sender bestimmte Digitalwerte fest abgespeichert, welche den Einfluss des Frequenz-Basisband-Impulses g(t) auf die Formung der Symbolfolge berücksichtigen. Für jeweils eine feste Anzahl von aufeinanderfolgenden Symbolen, die am Sendereingang anstehen, werden entsprechende zugeordnete Digitalwerte ausgespeichert, in geeigneter Weise miteinander kombiniert und zur Erzeugung des analogen phasenmodulierten Sendesignals verwendet. Einzelheiten dieser digitalen Realisation können der eingangs genannten Druckschrift entnommen werden.

Die verschiedenen Aspekte der CPM werden im Artikel von C.E. Sundberg "Continuous Phase Modulation", IEEE Communications Magazine, Bd. 24, No. 4, April 1986, beleuchtet. Unter anderem werden darin Leistungsdichtespektren und Bandbreite der CPM-Signale bei gegebenen Pulsformen untersucht. Es wird dabei von den aus den linearen Modulationsverfahren bekannten Pulsen wie z.B. SRC, LRC oder REC ausgegangen. Für diese Pulse wird auch die Euklidische Distanz als Massgabe für die Bitfehlerwahrscheinlichkeit untersucht.

Bei dem bekannten Verfahren wird nun die Funktion g(t) durch Ausprobieren festgelegt. Die abgespeicherten Digitalwerte werden aus der festgelegten Funktion g(t) durch lineare Superposition ermittelt. Die resultierenden spektralen Eigenschaften des Sendesignals können so auf mehr oder weniger zufällige Art verbessert werden.

Aufgabe der vorliegenden Erfindung ist es nun, ein Verfahren anzugeben, bei dem die spektralen Eigenschaften systematisch optimiert sind.

Bei einem Verfahren der eingangs genannten Art wird die Aufgabe durch die Merkmale aus dem Kennzeichen des Anspruchs 1 gelöst.

Der Kern der Erfindung besteht darin, für die Realisierung des Verfahrens nicht länger abgespeicherte Digitalwerte zu verwenden, die aus dem Frequenz-Basisband-Impuls g(t) durch lineare Superposition abgeleitet sind, sondern den Speicherinhalt direkt nach Massgabe des Kriteriums festzulegen, dass die in einem festen Frequenzband um die Trägerfrequenz herum liegende Signalleistung ein Maximum bzw. die ausserhalb dieses Bandes liegende Signalleistung ein Minimum sein soll. Die Erzeugung der optimalen Wellenform des CPM-Signals geschieht dadurch auf eine nichtlineare Weise.

Die Erfindung soll nun nachfolgend unter Berücksichtigung des mathematisch-theoretischen Hintergrundes im Zusammenhang mit der Zeichnung anhand von Ausführungsbeispielen näher erläutert werden.

Es zeigen:

Fig. 1     das prinzipielle Konzept eines CPM-Senders nach dem Stand der Technik,

Fig. 2     das Blockschaltbild eines Teils eines an sich bekannten digital aufgebauten CPM-Senders, wie er bei Anwendung des erfindungsgemässen Verfahrens Verwendung findet; und

Fig. 3     den Vergleich der erreichten spektralen Leistungsverteilung für eine herkömmliche lineare Formung und für eine nichtlineare Formung nach der Erfindung.

Die kontinuierliche Phasenmodulation (CPM) ist ein digitales Frequenzmodulations-Verfahren, bei dem das übertragene Signal eine konstante Hüllkurve aufweist.

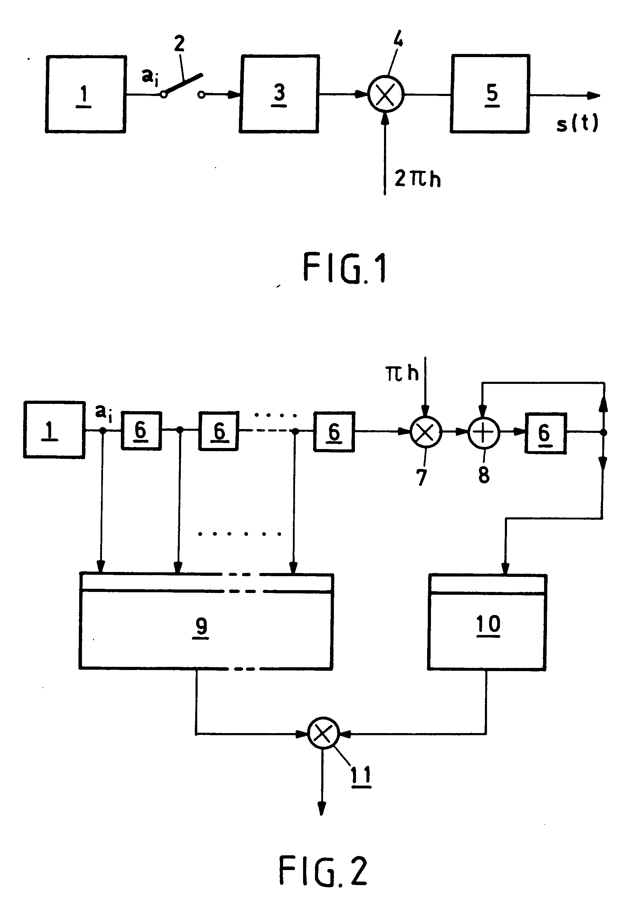

Das prinzipielle Konzept eines herkömmlichen CPM-Senders ist in Fig. 1 dargestellt. Eine Datenquelle 1 erzeugt eine fortlaufende Folge von Symbolen $a_i$ mit einer Rate 1/T (jedem Symbol kommt ein Intervall der Länge T zu). Die Symbole $a_i$ können M verschiedene, diskrete Werte ±1, ... ±(M-1) annehmen.

Die Symbole $a_i$ gelangen über eine Abtasteinrichtung 2 auf ein lineares Filter 3, wo sie nach Massgabe eines Frequenz-Basisband-Impulses g(t) geformt werden. Das Ausgangssignal des linearen Filters wird in einem Multiplizierer 4 mit dem Faktor $2\pi h$ multipliziert, der einen Modulationsindex h enthält. Das Produktsignal dient zur Ansteuerung eines Frequenzmodulators 5, an dessen Ausgang ein Sendesignal s(t) erscheint.

Das Sendesignal s(t) hat die Form

(1)     $s(t) = \cos [2\pi f_c t + \phi(t)]$

mit der Trägerfrequenz $f_c$ und der zeitabhängigen Phase $\phi(t)$. Für $\phi(t)$ gilt:

$$(2) \quad \phi(t) = \sum_{i=-\infty}^{+\infty} 2\pi h a_i \int_{-\infty}^{t} g(\tau - iT) d\tau \; .$$

Der Frequenz-Basisband-Impuls g(t) erstreckt sich über eine Länge L•T, d.h. über eine Länge von L Symbolintervallen. Er ist so normiert, dass für den zugehörigen Phasen-Basisband-Impuls

$$(3) \quad q(t) = \int_{-\infty}^{t} g(\tau) d\tau$$

die Relationen

(4)     $q(t) = 0$ für $t \leq 0$

$q(t) = q(L \cdot T) = \frac{1}{2}$ für $t \geq L \cdot T$

erfüllt sind. Jedes Symbol $a_i$ verändert also die Phase um den Betrag $\pi h a_i$.

Es ist nun das Ziel, die Funktion g(t) zu optimieren, um für das Sendesignal s(t) gute spektrale Eigenschaften zu erzielen. Dazu ist es notwendig, s(t) in einer Basisband-Darstellung zu erhalten.

Das Sendesignal kann dargestellt werden als

(5)     $s(t) = \text{Re} [\exp(j2\pi f_c t) \cdot v(t)]$

mit der komplexen Hüllkurve

(6)     $v(t) = \exp[j\phi(t)]$

Für die absolute Phase zur Zeit t im k-ten Symbolintervall ($kT \leq t \leq (k+1)T$) erhält man durch Kombination von (2)-(4):

$$(7) \quad \phi_k(t) = \sum_{i=-(L-1)}^{k-L} \pi h a_i + \sum_{i=k-(L-1)}^{k} 2\pi h a_i q(t-iT) \, .$$

Mit Einführung der beiden M-dimensionalen Vektoren

$$(8) \quad \underline{a}_k = \begin{vmatrix} \delta_{+1, \, a_k} \\ \delta_{-1, \, a_k} \\ \delta_{+3, \, a_k} \\ \delta_{-3, \, a_k} \\ \vdots \end{vmatrix} \qquad \delta = \text{Kroneckersymbol}$$

und

$$(9) \quad \underline{d}(t) = \begin{vmatrix} \exp(+j2\pi \, hq(t)) \\ \exp(-j2\pi \, hq(t)) \\ \vdots \\ \vdots \end{vmatrix} \qquad o \leq t \leq LT$$

ergibt sich für die komplexe Hüllkurve v(t):

$$(10) \quad v(t) = \sum_k \exp(j\phi_k(t)) = \sum_k \exp(j \sum_{i=-(L-1)}^{k-L} \pi \, ha_i) \cdot \prod_{i=k-(L-1)}^{k} \underline{a}'_i \cdot \underline{d}(t-iT)$$

wobei $\underline{a}'_i$ der transponierte Vektor $\underline{a}_i$ ist.

Schliesslich kann v(t) in der Form

$$(11) \quad v(t) = \sum_{k=-\infty}^{\infty} \underline{c}'_k \cdot \underline{r}(t-kT)$$

geschrieben werden mit

$$(12) \quad \underline{c}_k = \exp(j \sum_{i=-(L-1)}^{k-L} \pi \, ha_i) \, (\underline{a}_k \times \underline{a}_{k-1} \times \cdots \times \underline{a}_{k-(L-1)})$$

und

$$(13) \quad \underline{r}(t) = \underline{d}(t) \times \underline{d}(t+T) \times \cdots \times \underline{d}(t+(L-1)T)$$
$$0 \leq t \leq T$$

Gleichung (12) ist die gewünschte Basisband-Darstellung. Die "x" in den Gleichungen (12) und (13) bezeichnen Kronecker-Matrix-Produkte, so dass die Vektoren $\underline{c}_k$ und r(t) die Dimension $M^L$ aufweisen.

Die Vektoren $\underline{c}_k$ enthalten einen Faktor, der die akkumulierte Phasenänderung beschreibt, und einen Vektor mit einer 1 an der Stelle, welche dem jeweiligen Satz von L aufeinanderfolgenden Symbolen $a_{k-(L-1)}$, ..., $a_k$ entspricht.

Mit dieser "1"-Komponente selektiert der Vektor $\underline{c}_k$ die zugeordnete Komponente aus $\underline{r}(t)$ mit der entsprechenden Ueberlagerung von Phasenwerten. Insgesamt beschreibt also die Folge der Vektoren $c_k$ in der Darstellung der Gleichung (11) den Einfluss der Symbolfolge $a_i$, während der Effekt der Symbolformung durch g(t) bzw. q(t) in r(t) enthalten ist. Der Vektor $\underline{r}$(t) ist nur im Intervall von 0 bis T von Null verschieden und hat dort Komponenten der Form

$$(14) \quad \underline{r}(t) = \begin{bmatrix} \vdots \\ \exp(j \sum_{i=0}^{L-1} 2\pi\, h\underline{a}_i\, q(t+iT)) \\ \vdots \end{bmatrix}$$

Jede der Komponenten von r(t) ist einem von $M^L$ möglichen Werten für eine Folge von L Symbolen der Wertigkeit M ($a_{(L-1)}$, .., $a_o$) zugeordnet. Die Darstellung aus (11) wird nachfolgend für die Optimierung der spektralen Eigenschaften nach der Erfindung von besonderer Bedeutung sein.

Für die digitale Realisierung eines CPM-Senders kann das Sendesignal s(t), ausgehend von (1), in folgender Weise umgeschrieben werden:

$$(15) \quad s(t) = \cos(2\pi f_c t) \cdot \cos\phi(t) - \sin(2\pi f_c t) \cdot \sin\phi(t).$$

Unter Berücksichtigung von (7) ergibt sich in dem k-ten Symbolintervall ($kT \le t \le (k+1)T$) für den $\cos\phi$-(t)-Term aus (15):

$$(16) \quad \cos\phi(t) = \cos \sum_{i=k-(L-1)}^{k} 2\pi h a_i q(t-iT) \cdot \cos \sum_{i=-\infty}^{k-L} \pi h a_i -$$

$$\sin \sum_{i=k-(L-1)}^{k} 2\pi h a_i q(t-iT) \cdot \sin \sum_{i=-\infty}^{k-L} \pi h a_i$$

Ein analoger Ausdruck lässt sich auch für den $\sin\phi$(t)-Term ableiten.

Derjenige Teil eines digitalen CPM-Senders, der das cos-Produkt aus (16) erzeugt, ist in Fig. 2 wiedergegeben. Die fortlaufende Folge von Symbolen $a_i$ aus der Datenquelle 1 durchläuft zunächst ein aus L Schiebegliedern 6 gebildetes Schieberegister. Jede Folge von L im Schieberegister anstehenden Symbolen adressiert in einem ersten Speicher 9 Speicherplätze, welche Kurvenwerte der Funktion

$$\cos \sum_{i=k-(L-1)}^{k} 2\pi h a_i q(t-iT)$$

enthalten.

Der zweite Faktor des cos-Produktes aus (16), nämlich

$$\cos \sum_{i=-\infty}^{k-L} \pi h a_i$$

wird ähnlich aus einem zweiten Speicher 10 ausgelesen, der durch Werte adressiert wird, die aus den Symbolen $a_i$ durch Multiplikation mit $\pi h$ im Multiplikator 7 und Addition des vorhergehenden Wertes im Addierer 8 erzeugt werden.

Das cos-Produkt wird schliesslich im Multiplikator 11 gebildet.

Das Blockdiagramm eines vollständigen CPM-Senders ist in der eingangs genannten Druckschrift wiedergegeben. Als Speicher 9 und 10 werden ROMs (Read Only Memories) verwendet, wobei der Speicher 9 einen Umfang von $N \cdot N_q \cdot M^L$ bits aufweist, wenn $N$ Kurvenwerte pro Symbolintervall und $N_q$ bits pro Kurvenwert benötigt werden.

Vergleicht man nun (16) und (14), so stellt sich heraus, dass der Speicher 9 aus Fig. 2 im wesentlichen gerade die Komponenten des Vektors $r(t-kT)$ enthält. Diese Uebereinstimmung bildet eine Grundlage für die Optimierung der spektralen Eigenschaften des CPM-Systems.

Vorausgesetzt sei die $M^L$-dimensionale Basisband-Darstellung für v(t) aus (11). Für K Symbole ergibt sich

$$(17) \quad v(t) = \sum_{k=0}^{K-1} \underline{c}_k' \; \delta(t-kT) * \underline{r}(t)$$

wobei "*" eine Faltung bezeichnet. Die Fourier-Transformierte davon ist

$$(18) \quad V_K(f) = \underline{R}'(f) \cdot \sum_{k=0}^{K-1} \underline{c}_k \exp(-j2\pi fkT)$$

Mit der formalen Definition für die spektrale Leistungsdichte

$$(19) \quad P_V(f) = \lim_{K \to \infty} \frac{1}{KT} \; E\left[V_K(f) \cdot V_K^*(f)\right]$$

folgt unter Verwendung von (19):

$$(20) \quad P_v(f) = \frac{1}{T} \underline{R}'(f) \, P_c(f) \underline{R}^*(f).$$

R(f) ist hierbei der Vektor der Fourier-Transformierten von $r(t)$, f ist die Frequenz, E der Erwartungswert. Weiterhin gilt:

$$(21) \quad P_c(f) = \sum_{n=-\infty}^{\infty} \phi_c(n) \exp(-j2\pi fnT)$$

mit

$$(22) \quad \phi_c(n) = E\left[\underline{c}_k \underline{c}_{k-n}^+\right]$$

Für die Optimierung der spektralen Eigenschaften des Sendesignals s(t) müsste prinzipiell ein Frequenz-Basisband-Impuls g(t) gesucht werden, der dieses optimale Ergebnis liefert. Wie bereits erwähnt, geht die Erfindung einen anderen Weg: Sie erzeugt anhand eines speziellen Optimierungskriteriums abzuspeichernde Digitalwerte für den Speicher 9 aus Fig. 2, der ein Sendesignal s(t) mit den gewünschten optimierten Eigenschaften generiert.

Das Optimierungsproblem mit dem darin enthaltenen Optimierungskriterium lässt sich wie folgt formulieren: Finde einen optimalen Impuls-Formungs-Vektor $r(t)$ der in (13) und (14) dargestellten Art, derart, dass

$$(23) \quad P_B = \int_{-B}^{B} P_V(\Delta f) d(\Delta f) \qquad \Delta f = f - f_c$$
$$2B = \text{Bandbreite}$$

ein Maximum ist. $P_B$ ist hierbei die in ein Frequenzband der Breite 2B fallende Leistung. Gleichbedeutend mit dem Kriterium der maximalen Leistung in einem festen Frequenzband ist das Kriterium der minimalen Leistung ausserhalb dieses Frequenzbandes.

Wie man aus (23) in Verbindung mit (20) unschwer erkennt, erfolgt die Optimierung durch Veränderung des Vektors r(t), nicht aber durch Wahl von g(t). Dies bedeutet, dass beim erfindungsgemässen Verfahren der Speicherinhalt, d.h. die abgespeicherten Digitalwerte für die Erzeugung des Sendesignals s(t) direkt optimiert werden. Die optimalen CPM-Wellenformen werden also auf nichtlineare Weise generiert, was im Allgemeinen durch ein Schema aus Fig. 1 nicht mehr dargestellt werden kann.

Nachfolgend soll nun angegeben werden, wie die beschriebene Optimierung rechnerisch durchgeführt werden kann. Einsetzen von (20) in (23) liefert den Ausdruck

$$(24) \quad P_B = \frac{1}{T} \int_{-B}^{B} \underline{R}'(f) P_c(f) \underline{R}^*(f) df$$

Mit der Näherung für diskrete Zeitwerte

$$(25) \quad r_k = r(k \bullet \Delta T), \; k = 0, ..., N-1; \; \Delta T = \frac{T}{N}$$
(N = Anzahl der Abtastwerte; $\Delta T$ = Abtastintervall)

erhält man für die Fourier-Transformierte $\underline{R}(f)$ von $\underline{r}(t)$:

$$(26) \quad \underline{R}(f) = \sum_{k=0}^{N-1} \underline{r}_k \exp(-j2\pi fk\Delta T) \bullet \Delta T$$

Die Kombination von (26) und (24) ergibt einen Ausdruck der Form

$$(27) \quad P_B = \frac{T}{N^2} \sum_{k=0}^{N-1} \sum_{m=0}^{N-1} \underline{r}_k' P_{km}(B) \underline{r}_m^*$$

wobei die $P_{km}$ Elemente einer $M^L \bullet M^L$-Matrix sind:

$$(28) \quad P_{km}(B) = \int_{-B}^{B} P_c(f) \exp(j2\pi fT\frac{m-k}{N}) df$$
$$k,m = 0, \; ..., \; N-1$$

Die Funktion $P_B$ aus (27) muss nun bezüglich der Vektoren $\underline{r}_k$ maximiert werden. Aus (14) erkennt man, dass die $M^L$ Komponenten von $\underline{r}(t)$ vom modulus 1 sind, d.h. $\underline{r}_k$ die Form

7

$$(29) \quad \underline{r}_k = \left| \begin{array}{c} \exp(j\,\phi_0\,(k)) \\ \vdots \\ \exp(j\,\phi_{ML-1}(k)) \end{array} \right| \quad , \; k = 0, \ldots, N-1$$

hat.

Mit diesen Voraussetzungen kann das oben genannte Optimierungsproblem numerisch gelöst werden. Dazu wird zunächst ein Satz von $P_{km}(B)$-Werten für ein vorgegebenes Band der Breite 2B berechnet. Dann wird mit Hilfe eines numerischen Verfahrens $P_B$ aus (27) im Bezug auf die $\phi_i(k)$ aus (29) maximiert.

Dies geschieht z.B. durch einen iterativen Algorithmus (steepest ascent gradient algorithm) mit der Iteration

$$(30) \quad \underline{\phi}_{n+1} = \underline{\phi}_n + \Delta \cdot \frac{\partial P_B}{\partial \underline{\phi}}$$

wobei $\Delta$ die Schrittweite bezeichnet und $\underline{\phi}$ der $N \bullet M^L$-dimensionale Vektor

$$(31) \quad \underline{\phi} = \left| \begin{array}{c} \phi_0\,(0) \\ \phi_1\,(0) \\ \vdots \\ \phi_0\,(1) \\ \phi_1\,(1) \\ \vdots \\ \phi_0\,(N-1) \\ \phi_1\,(N-1) \\ \vdots \end{array} \right|$$

ist.

Die Summe der quadratischen Formen aus (27) kann auch als

$$(32) \quad P_B = \frac{T}{N^2} \sum_u \sum_v \exp(j\phi_u) \; p_{uv} \; \exp(-j\phi_v)$$

geschrieben werden, wobei die Summen über u und v über $NM^L$ Summanden erstreckt werden und $\phi_u$ und $\phi_v$ die Komponenten von $\underline{\phi}$ darstellen. Die Matrix $(p_{uv})$ besteht aus einer geeigneten Anordnung der Untermatrizen $(P_{km}(B))$.

Die Komponenten des Gradienten von $P_B$ aus (32) bezüglich $\underline{\phi}$ sind dann nach einigen Umformungen von folgender Gestalt.

$$(33) \quad \frac{\partial P_B}{\partial \phi_u} = -2 \frac{T}{N^2} \sum_{\substack{v=0 \\ v \neq u}}^{N \cdot M^L - 1} Jm \left| \exp(j(\phi_u - \phi_v) p_{uv} \right|$$

$$u = 0, \ldots, N \cdot M^L - 1.$$

Schliesslich benötigt man für die Iteration (30) Anfangswerte für $\phi$. Am einfachsten ist es, die $\phi_i(k)$ zu verwenden, die sich aus der linearen Formung mit einer vorgegebenen Funktion g(t) über (9) und (13) ergeben. Auf gleiche Weise erhält man auch die Funktion $P_c(f)$ für vorgegebene Werte M, L und h.

Die Matrizen $(P_{km}(B))$ können prinzipiell aus $P_c(f)$ durch numerische Integration gemäss (28) erhalten werden.

Zur weiteren Erläuterung seien die Vorzüge des erfindungsgemässen Verfahrens an einem Beispiel demonstriert. Vorausgesetzt wird ein binäres System (M = 2), in welchem die Symbole $a_i$ nur zwei mögliche Werte annehmen können. Zum Vergleich wird ein herkömmliches lineares Verfahren mit einem Frequenz-Basisband-Impuls g(t) in Form eines angehobenen Kosinus (RC = Raised Cosine) herangezogen, der sich über L = 3 Symbolintervalle erstreckt. Der Modulationsindex h sei h = 1/2.

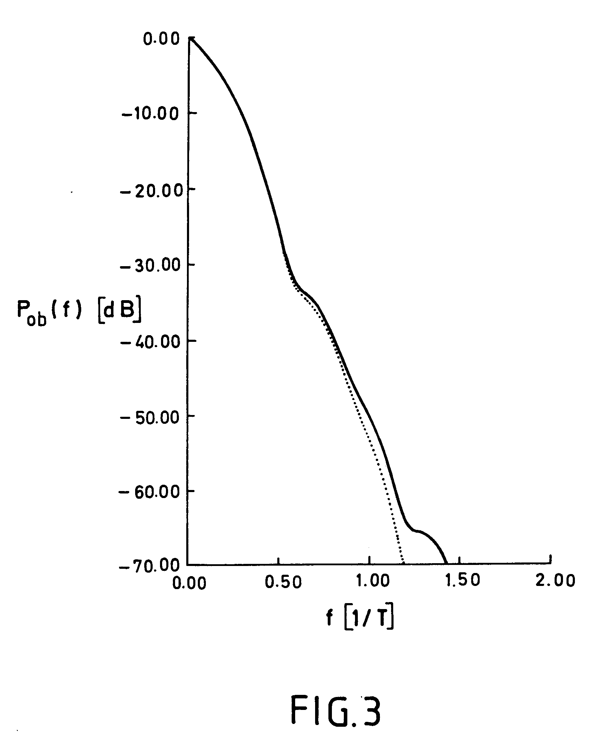

Verglichen wird in Fig. 3 die sogenannte "Out-of-Band"-Leistung $P_{ob}$, die wie folgt definiert ist:

$$(34) \quad P_{ob}(f) = \int_f^\infty P_v(\nu)d\nu \ / \ \int_0^\infty P_v(\nu)d\nu$$

Die durchgezogene Kurve aus Fig. 3 zeigte die spektrale Verteilung von $P_{ob}(f)$ über f (in Einheiten von 1/T) für die herkömmliche lineare Formung, bei der die abgespeicherten Digitalwerte aus der Funktion g(t) direkt berechnet werden.

Die punktierte Kurve dagegen zeigt das entsprechende Ergebnis für einen optimierten Speicherinhalt, bei dem in der oben beschriebenen Weise eine Optimierung mit 200 Iterationsschritten vorgenommen worden ist.

Man erkennt deutlich die Verschiebung des -70 dB-Punktes zu einer kleineren Frequenz, was eine Erhöhung der bit-Rate um einen Faktor 1,18 bedeutet.

Insgesamt erhält man also durch Einsatz der optimierten Digitalwerte in den Speichern eines digitalen CPM-Systems eine Uebertragung von digitalen Daten mit deutlich verbesserten spektralen Eigenschaften.

**Patentansprüche**

1. Verfahren zur Uebertragung von digitalen Daten mittels kontinuierlicher Phasenmodulation einer Trägerschwingung mit den folgenden Eigenschaften:

(a) die digitalen Daten liegen in Form einer fortlaufenden Folge von Symbolen ($a_i$) vor, die mit einer Rate 1/T auftreten und M mögliche, diskrete Werte annehmen können;

(b) die Informationen werden mit einer Trägerfrequenz $f_c$ und einer zeitabhängigen Phase $\phi(t)$ in einem Sendesignal s(t) der Form

$$s(t) = \cos \left| 2\pi f_c t + \phi(t) \right|$$

übertragen;

(c) die Symbole $a_i$ werden vor der Uebertragung einer Formung nach Massgabe eines sich über L Symbolintervalle L $\cdot$ T erstreckenden Frequenz-Basisband-Impulses unterzogen;

(d) für jede mögliche Folge von L Symbolen sind eine Mehrzahl von Digitalwerten fest abgespeichert, welche zur Erzeugung des Sendesignals s(t) der jeweils am Sendereingang anstehenden Symbolfolge zugeordnet, ausgespeichert und in ein analoges Signal umgewandelt werden;

dadurch gekennzeichnet, dass

(g) als abgespeicherte Digitalwerte nur solche Werte verwendet werden, für welche die in einem festen Frequenzband um die Trägerfrequenz ($f_c$) herum liegende Leistung des Sendesignals s(t) ein Maximum ist.

**2.** Verfahren nach Anspruch 1, dadurch gekennzeichnet, dass

(a) für jedes Symbolintervall k ($kT \leq t \leq (k+1)T$) den L letzten Symbolen $a_{k-L+1}$, ..., $a_k$ eine Funktion $F_k(t)$ zugeordnet wird, und

(b) als abgespeicherte Digitalwerte Abtastwerte der Funktionen sin $F_K(t)$ und cos $F_K(t)$ verwendet werden.

**3.** Verfahren nach Anspruch 2, dadurch gekennzeichnet, dass zur Bestimmung der abgespeicherten Digitalwerte die Grösse

$$P_B = \int_{-B}^{B} P_v(\Delta f)\, d\,(\Delta f)$$

($P_B$ = Inband-Leistung; $P_v$ = spektrale Leistungsdichte, $\Delta f = f - f_c$; B = halbe Bandbreite) maximiert wird.

**4.** Verfahren nach Anspruch 3, dadurch gekennzeichnet, dass für die Bestimmung der abgespeicherten Digitalwerte die Inband-leistung $P_B$ mittels eines Iterationsverfahrens maximiert wird.

## Claims

**1.** Method for digital data transmission using continuous phase modulation of a carrier oscillation with the following features:

(a) the digital data are provided in the form of a continuous series of symbols ($a_i$), which occur at a rate of 1/T and can assume M possible discrete values;

(b) the data are transmitted at a carrier frequency $f_c$ and a time-dependent phase $\phi(t)$ in a transmission signal s(t) of the form

$$s(t) = \cos |2\pi f_c t + \phi(t)|$$

(c) the symbols $a_i$ are subjected, prior to transmission, to shaping according to the dimensions of a frequncy baseband pulse which extends across L symbol intervals L-T;

(d) for each possible series of L symbols a plurality of digital values are securely stored, which values are, for the generation of the transmission signal s(t), allocated to the series of symbols existing at the transmitter input in each case, read out and converted into an analogue signal; characterised in that

(g) only those values for which the power of the transmission signal s(t) which is in a fixed frequency band around the carrier frequency ($f_c$), is a maximum are used as stored digital values.

**2.** Method according to claim 1, characterised in that

(a) for every symbol interval k ($kT \leq t \leq (k+1)T$) a function $F_k(t)$ is allocated to the L last symbols $a_{k-L+1}$ ,..., $a_k$; and

(b) sample values of the functions sin $F_K(t)$ and cos $F_K(t)$ are used as stored digital values.

**3.** Method according to claim 2, characterised in that the parameter

$$P_B = \int_{-B}^{B} P_v(\Delta f)\, d\,(\Delta f)$$

($P_B$ = inband power; $P_v$ = spectral power density, $f = \Delta f - f_c$; B = half bandwidth)

is maximised to determine the stored digital values.

4. Method according to claim 3, characterised in that, to determine the stored digital values, the inband output $P_B$ is maximised by means of an iteration process.

**Revendications**

1. Procédé pour la transmission de données numériques au moyen de la modulation de phase continue d'une oscillation porteuse ayant les propriétés suivantes :

    (a) les données numériques se présentent sous la forme d'une suite continue de symboles ($a_i$) se produisant selon une fréquence 1/T et pouvant prendre des valeurs discrètes possibles M ;

    (b) les informations sont transmises par une fréquence porteuse $f_c$ et une fréquence temporelle $\phi(t)$ dans un signal émetteur s(t) de la forme

$$s(t) = \cos |2\,\pi\,f_c t + \phi(t)|$$

    (c) les symboles $a_i$ sont soumis, avant la transmission, à un formage en fonction d'une impulsion de bande base-fréquence s'étendant sur L intervalle symbole L-T ;

    (d) pour chaque suite possible de symboles L sont conservées fixement en mémoire plusieurs valeurs numériques qui sont affectées à la production du signal d'émission s(t) de respectivement la suite des symboles en attente à l'entrée de l'émetteur, sortis de mémoire et transformés en un signal analogique ;

    caractérisé en ce que

    (g) comme valeurs numériques conservées en mémoire, on n'utilise que les valeurs pour lesquelles la puissance se situant dans une bande de fréquence fixe aux alentours de la fréquence porteuse ($f_c$) du signal émetteur s(t) est un maximum.

2. Procédé selon la revendication 1, caractérisé en ce que

    (a) pour chaque intervalle de symbole k (kT $\leq$ t $\leq$ (k+1)T) on affecte une fonction $F_k(t)$ aux derniers symboles L $a_{k-L+1}$, ,..., $a_k$, et

    (b) en tant que valeurs numériques conservées en mémoire, on utilise les valeurs lues des fonctions sin $F_K(t)$ et cos $F_K(t)$.

3. Procédé selon la revendication 2, caractérisé en ce que pour la détermination des valeurs numériques conservées en mémoire, on maximise la grandeur

$$P_B = \int_{-B}^{B} P_V(\Delta f)\, d\,(\Delta f)$$

($P_B$ = deux bandes ; $P_V$ = puissance volumique spectrale ; $\Delta f$ = f - $f_c$ ; B = demi largeur de bande).

4. Procédé selon la revendication 3, caractérisé en ce que pour la détermination des valeurs numériques conservées en mémoire, on maximise la puissance sur bande $P_B$ au moyen d'un procédé d'itération.

FIG.1

FIG.2

12

FIG.3